(19) Europäisches Patentamt
European Patent Office
Office européen des brevets

(11) **EP 3 442 124 B1**

(12) **EUROPÄISCHE PATENTSCHRIFT**

(45) Veröffentlichungstag und Bekanntmachung des Hinweises auf die Patenterteilung:
**05.02.2020 Patentblatt 2020/06**

(51) Int Cl.:
*H03M 7/24* (2006.01)  *H03M 7/02* (2006.01)
*H03M 7/40* (2006.01)  *H03M 7/30* (2006.01)

(21) Anmeldenummer: **17185083.7**

(22) Anmeldetag: **07.08.2017**

(54) **VERFAHREN ZUM SCHÜTZEN DER DATEN IN EINEM DATENSPEICHER VOR EINER UNERKANNTEN VERÄNDERUNG UND DATENVERARBEITUNGSANLAGE**

METHOD FOR PROTECTING DATA IN A DATA STORAGE MEDIUM TO PREVENT AN UNRECOGNISED CHANGE AND CORRESPONDING DATA PROCESSING SYSTEM

PROCÉDÉ DE PROTECTION DES DONNÉES DANS UNE MÉMOIRE DE DONNÉES CONTRE UNE MODIFICATION NON RECONNUE ET SYSTÈME DE TRAITEMENT DE DONNÉES CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.02.2019 Patentblatt 2019/07**

(73) Patentinhaber: **Siemens Aktiengesellschaft**
**80333 München (DE)**

(72) Erfinder:
• **Walter, Maximilian**
  **90408 Nürnberg (DE)**

• **Witte, Karl-Hermann**
  **90768 Fürth (DE)**

(56) Entgegenhaltungen:
**EP-A1- 3 104 276**

• **Ute Schiffel: "Hardware Error Detection Using AN-Codes", , 20. Mai 2011 (2011-05-20), XP055448091, Dresden, Germany Gefunden im Internet: URL:https://d-nb.info/1067189289/34 [gefunden am 2018-02-06]**

EP 3 442 124 B1

**Beschreibung**

Die Erfindung betrifft ein Verfahren zum Schützen der Daten in einem Datenspeicher vor einer unerkannten Veränderung, sowie eine Datenverarbeitungsanlage.

In sicherheitsgerichteten Anwendungen ist es üblich, Variablen in einer codierten Form zu verwenden, um sie vor Fehlern und einer unerkannten Veränderung schützen zu können. Während einer arithmetischen Codierung wird eine funktionale Variable x um verschiedene Prüfbits erweitert, welche es ermöglichen, bestimmte aufgetretene Fehler erkennen zu können. Eine verbreitete Form der arithmetischen Codierung ist die ANBD-Kodierung. In der ANBD-Kodierung wird eine uncodierte funktionale Variable x mittels einer Eingangskonstanten A, einer variablenspezifischen Eingangssignatur $B_x$ und eines Zeitstempels D in eine codierte Variable $x_c$ überführt.

$$x_c = A*x+B_x+D$$

Die Eingangskonstante A ermöglicht es, Fehler im Wertebereich zu erfassen. Die Verwendung einer variablenspezifischen Eingangssignatur $B_x$ ermöglicht die Erkennung von Operanden- und Operatorenfehlern. Mittels der Verwendung eines Zeitstempels D kann eine nicht erfolgte Aktualisierung der Variablen erkannt werden.

In der Anwendung wird dabei durchgehend die codierte Variable $x_c$ verwendet, weil eine Decodierung der Variablen in die uncodierte Form x zum Verlust der in der codierten Variablen $x_c$ vorhandenen Fehlerinformationen führen würde. Zur Durchführung von Rechenoperationen mit einer codierten Variablen $x_c$ ist es erforderlich, codierte Operatoren zu verwenden, welche nicht nur den funktionalen Teil x, sondern auch die zugeordneten Prüfbits in die Operation einbeziehen.

Ein Verfahren, welches es ermöglicht, eine ANBD-codierte Variable $x_c$ in eine A'NB'D'-codierte Variable $x_c'$ umzucodieren, d.h. die Prüfbts A, B und D durch die Prüfbts A',B' und D' zu ersetzen, ohne dabei die codierte Variable in einem der Zwischenschritte zu decodieren, ist in der EP 3 104 276 A1 beschrieben.

Nachteilig an der ANBD-Kodierung ist, dass die Realisierung einer Fließkommaarithmetik in dieser Kodierung sehr aufwändig ist. So werden Fließkommazahlen (u.a. auch Real oder Float genannt) nach dem gegenwärtigen Stand der Technik in rein softwarebasierten sicherheitsgerichteten Anwendungen als Datentyp nicht explizit verarbeitet. Für jede Anforderung muss nach dem derzeitigen Stand der Technik ein jeweiliger Lösungsansatz in Ganzzahlarithmetik (u.a. auch Integer genannt) gefunden werden. In sicherheitsgerichteten Anwendungen ist dabei zu beachten, dass nicht der mittlere sondern der maximale Fehler einer Berechnung relevant ist. Die Eigenschaft der Fließkommaarithmetik, dass ein Wert immer möglichst genau berechnet wird, ist aus diesem Grund in sicherheitsgerichteten Anwendungen nicht relevant, führt aber bei ANBD-codierter Verarbeitung dieses Datentyps zu einer Rechenzeit, welche um Größenordnungen länger ist als die Rechenzeit bei einer uncodierten Verarbeitung. Die Verwendung einer Festpunktarithmetik ist keine Alternative, weil sie insbesondere für aufwändigere Verarbeitungen nicht die gewünschte Genauigkeit ermöglicht.

In der 2011 an der Fakultät für Informatik der Technischen Universität Dresden vorgelegten Dissertation "Hardware error detection using AN-codes" von Ute Schiffel werden Verfahren zur AN-, ANB- und ANBD-kodierten Durchführung von Operationen beschrieben.

Es ist deshalb eine Aufgabe der Erfindung, eine Darstellung der Daten bereitzustellen, welche eine vergleichbare Anwendungsflexibilität wie die Fließkommaarithmetik ermöglicht, jedoch weniger Rechenschritte erfordert.

Erfindungsgemäß wird ein Verfahren zum Schützen der Daten in einem Datenspeicher vor einer unerkannten Veränderung bereitgestellt. Mit dem Verfahren kann also eine Veränderung der Daten erkannt werden. Dabei wird eine funktionale Variable x mittels eines Wertes $wert_x$, einer Eingangskonstanten A, einer Eingangssignatur $B_x$ und eines Zeitstempels D zu einer codierten Variablen $x_c$ gemäß der Formel

$$x_c = wert_x*A+B_x+D$$

codiert.

Das Verfahren ist dadurch gekennzeichnet, dass zum Bilden des ganzzähligen Wertes $wert_x$ aus der funktionalen Variablen x, diese bezüglich einer Basis $Basis_x$ normiert wird. Mit anderen Worten wird eine funktionale Variable x in eine ANBD-codierte Variable $x_c$ überführt, wobei die funktionale Variable zu einer Basis $Basis_x$ normiert wird. Das bedeutet, dass die funktionale Variable x innerhalb der codierten Variablen $x_c$ als $wert_x$ dargestellt wird, welcher ein ganzzähliges Vielfaches der Basis $Basis_x$ ist. Die Basis $Basis_x$ ist somit die Einheit, in der die funktionale Variable x dargestellt wird. Somit wird eine als Fließkommazahl vorliegende funktionale Variable x in der codierten Variablen als funktionaler Anteil durch eine Ganzzahl $wert_x$ wiedergegeben. Dadurch ergibt sich der Vorteil, dass Operationen betreffend die funktionale Variable x in Ganzzahlarithmetik durchgeführt werden können. Somit werden der maximale Fehler bei Operationen im Vergleich zur Fließkommaarithmetik und der benötigte Rechenaufwand reduziert. Gleichzeitig wird die Flexibilität gegenüber der Fließkommadarstellung in Bezug auf den Wertebereich nicht eingeschränkt. Die Rechnungen erfolgen somit mit einer höheren Genauigkeit in den Zwischenergebnissen und einer anschließenden Rundung. Durch das Verfahren erhöht sich die Dauer einer codierten Verarbeitung um einen Faktor gegenüber der uncodierten Verarbeitung. Dieser Faktor liegt deutlich unter den mehreren Größenordnungen, um welchen sich die Dauer bei der Verwendung von codierten Gleitkommazahlen gegenüber der uncodierten Verarbeitung erhöht.

Es ist vorgesehen, dass der Wert $wert_x$ in einer ersten Alternative gemäß der Formel

$$wert_x := (x/Basis_x) \bmod (2)^{Size_x}$$

berechnet wird. Mit anderen Worten wird die funktionale Variable x durch die Basis $Basis_x$ dividiert, wobei ein Rest der Division vernachlässigt wird. $Size_x$ ist die Anzahl der möglichen Zustände bzw. der zur Verfügung stehende Speicher. Dieser kann durch die verfügbare Bitanzahl n für die Speicherung eines einzelnen Werts vorgegeben sein, also z.B. bei n=16 Bit einen Wert $2^n = 2^{16}$ betragen. Dadurch ergibt sich der Vorteil, dass der Wert $wert_x$ als eine Ganzzahl vorliegt. Es ist somit möglich, eine Gleitkommazahl in eine Ganzzahl zu überführen.

Eine zweite Alternative sieht vor, dass der Wert $wert_x$ gebildet wird, indem ein gemäß einem Steuerprogramm vordefinierter kleinster erreichbarer Wert $min_x$ der funktionalen Variablen x von der funktionalen Variablen x subtrahiert wird, bevor dieser durch die Basis $Basis_x$ unter Vernachlässigung des Rests dividiert wird, also

$$wert_x := (x - min_x/Basis_x) \bmod (2)^{Size_x}$$

Der Wert $min_x$ kann in einem Probelauf des Steuerprogramms in uncodierter Form ermittelt werden.

Dadurch ergibt sich der Vorteil, dass der Wertebereich auf den vordefinierten Wertebereich beschränkt wird.

Eine Weiterbildung des Verfahrens sieht vor, dass die funktionale Variable x während eines Kompiliervorgangs zu der codierten Variablen $x_c$ codiert wird. Mit anderen Worten wird die funktionale Variable x während der Binärzahlgenerierung, zum Beispiel im Compiler, zu der codierten Variablen $x_c$ codiert. Die Codierung und insbesondere die Normierung auf eine feste Basis erfolgen somit bereits zum Zeitpunkt der Codegenerierung. Dadurch ergibt sich der Vorteil, dass die Rechenzeit während der Durchführung des Programms reduziert werden kann, weil eine Festsetzung einer Basis während der Laufzeit eines Programms nicht mehr erfolgen muss.

Eine Weiterbildung sieht vor, dass die Daten für ein Steuerprogramm bereitgestellt werden und die Basis $Basis_x$ auf einen Wert größer oder gleich der Differenz zwischen einem gemäß dem Steuerprogramm vordefinierten größten erreichbaren Wert $max_x$ des Wertes x und einem kleinsten erreichbaren Wert $min_x$ des Wertes x geteilt durch die Größe des verfügbaren Speichers berechnet wird, also

$$Basis_x \geq (max_x - min_x)/Size_x$$

Mit anderen Worten stellt die Basis $Basis_x$ die kleinstmögliche Einheit dar, in welche der erreichbare Wertebereich aufgeteilt werden kann. Durch diesen Schritt ergeben sich zwei Vorteile: Dadurch, dass die Basis bezüglich des gesamten erreichbaren Wertebereichs bestimmt wird, ist ein Überlaufen von Werten ausgeschlossen. D.h. es wird verhindert, dass ein Wert über dem Maximalwert liegt und somit nicht dargestellt werden kann. Dadurch dass die Basis den kleinstmöglichen Wert annimmt, wird die größtmögliche Genauigkeit bereitgestellt. D.h. dass die Rechenungenauigkeit aufgrund einer zu grob gewählten Basis minimiert wird. Insgesamt führt diese Weiterbildung dazu, dass die Basis den kleinstmöglichen Wert annimmt, welcher ohne die Gefahr eines Überlaufs möglich ist. Der genaue Wert der Basis $Basis_x$ kann nach diesem Kriterium festgelegt werden.

Eine Weiterbildung des Verfahrens sieht vor, dass eine codierte Addition $+_c$ von zwei codierten Variablen $x_{1c}$ und $x_{2c}$ gemäß der Formel:

$$x_{3c} := x_{1c} +_c x_{2c}$$

mit:

$$\mathtt{wert_{x3} := (wert_{x1}*k_1+wert_{x2}*k_2+k_3)/Size_{x3}}$$

durchgeführt wird, wobei

$$\mathtt{max_{x3} = max_{x1}+max_{x2}}$$

$$\mathtt{min_{x3} = min_{x1}+min_{x2}}$$

$$\mathtt{Basis_{x1} \geq (max_{x1}-min_{x1})/Size_{x1}}$$

$$\mathtt{Basis_{x2} \geq (max_{x2}-min_{x2})/Size_{x2}}$$

$$\mathtt{Basis_{x3} \geq (max_{x3}-min_{x3})/Size_{x3}}$$

$$\mathtt{k_2/k_1 \approx Basis_{x1}/Basis_{x2}}$$

$$\mathtt{k_1+Basis_{x1}/2^n \approx Basis_{x3}}$$

$$\mathtt{k_2+Basis_{x2}/2^n \approx Basis_{x3}}$$

gilt, und $\approx$ bedeutet, dass aufgrund von Rundungsfehlern und der Prozessorungenauigkeit keine mathematische Gleichheit vorliegen muss, aber die angegebene Rechnung durchzuführen ist.

Mit anderen Worten ist der codierte Operator $+_c$, betreffend die Addition durch die oben aufgeführte Formel definiert. Dabei wird in dem übersetzten Programm nur mit den Werten $wert_{x1}$ $wert_{x2}$ und $wert_{x3}$ gerechnet. Die Konstanten $k_1$ und $k_2$ beschreiben dabei die Relationen zwischen den Basen $Basis_{x1}$, $Basis_{x2}$ und $Basis_{x3}$. Die Basis $Basis_{x1}$ ist die Basis der Variablen $x_1$, die Basis $Basis_{x2}$ die Basis der Variablen $x_2$ und die Basis $Basis_{x3}$ die Basis des Ergebnisses $x_3$. Die gemäß des Steuerprogramms vordefinierten größten Werte $max_{x1}$ und $max_{x2}$, sowie die gemäß des Steuerprogramms vordefinierten kleinsten Werte $min_{x1}$ und $min_{x2}$ der Variablen $x_1$ und $x_2$ werden zur Bildung der Basen $Basis_{x1}$ und $Basis_{x2}$ verwendet. Der kleinste und der größte Wert für $x_3$ wird mittels einer Addition der größten, bzw. kleinsten Werte der Variablen $x_1$ und $x_2$ gebildet. Die Konstante $k_3$ kann derart gewählt werden, dass Rundungsfehler minimal werden. Die Bestimmung der Basen kann durch einen Compiler erfolgen. Dadurch ergibt sich der Vorteil, dass während der Laufzeit der Addition keine Basis bestimmt werden muss. Zudem werden während der Operation nur Ganzzahlen verwendet. Getrennte Operationen betreffend die Mantisse und den Exponenten, wie dies bei der Addition von Fließkommazahlen notwendig ist, und die hierfür erforderlichen Transformationen und Normalisierungen, sind somit nicht erforderlich.

Eine Weiterbildung sieht vor, dass eine codierte Multiplikation $*_c$ von zwei codierten Variablen $x_{1c}$ und $x_{2c}$ gemäß der Formel:

$$\mathtt{x_{3c} := x_{1c} \ *_c \ x_{2c} \ mit}$$

mit

$$\mathtt{wert_{x3} := (wert_{x1}*wert_{x2}+k)/Size_{x3}}$$

durchgeführt wird, wobei

$$Basis_{x1} \geq (max_{x1}-min_{x1})/Size_{x1}$$

$$Basis_{x2} \geq (max_{x2}-min_{x2})/Size_{x2}$$

$$Basis_{x3} \geq (max_{x3}-min_{x3})/Size_{x3}$$

$$Basis_{x3} \approx (Basis_{x1}*Basis_{x2})/Size_{x3}$$

$$max_{x3} = MAX(min_{x1}*min_{x2}, min_{x1}*max_{x2}, max_{x1}*min_{x2}, max_{x1}*max_{x2})$$

$$min_{x3} = MIN(min_{x1}*min_{x2}, min_{x1}*max_{x2}, max_{x1}*min_{x2}, max_{x1}*max_{x2})$$

gilt.

Mit anderen Worten erfolgt eine Multiplikation der codierten Variablen $x_{1c}$ und $x_{2c}$ mittels der Werte $wert_{x1}$ und $wert_{x2}$. Als größtmöglicher Wert $max_{x3}$ bzw. als kleinstmöglicher Wert $min_{x3}$ der Variablen $x_3$ wird das jeweils größte bzw. kleinste Produkt verwendet, das sich bei einer Multiplikation der größtmöglichen Werte $max_{x1}$, $max_{x2}$ bzw. der kleinstmöglichen Werte $min_{x1}$, $min_{x2}$ von $x_1$ und $x_2$ ergibt.

Eine Weiterbildung sieht vor, dass eine Umkodierung eines Wertes $wert_{x1}$ mit einer Basis $Basis_{x1}$ auf einen Wert $Wert'_{x1}$ mit einer Basis $Basis'_{x1}$ gemäß der Formel

$$Wert'_{x1} = (((wert_{x1}+k_1)/2^n)*k_2+k_3)/2^{n'}$$

durchgeführt wird,
wobei

$$k_2/(2n+n') \approx Basis_x/Basis'_x$$

und n' die Bitanzahl der umcodierten Darstellung ist.

Dabei ist es vorgesehen, dass die Konstanten $k_1$, $k_2$ und $k_3$ der Art gewählt werden, dass der Rundungsfehler in Abhängigkeit von $k_2$ minimiert wird.

Die Erfindung umfasst auch eine Datenverarbeitungsanlage, welche zur Durchführung eines der vorstehenden Verfahren eingerichtet ist. Dabei kann es sich beispielsweise um einen Mikrocontroller oder einen Mikroprozessor handeln.

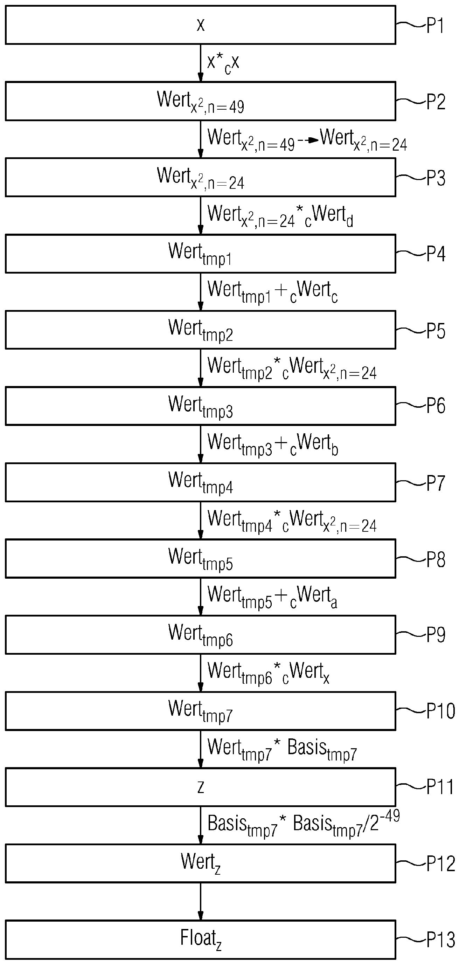

Im Folgenden ist ein Ausführungsbeispiel der Erfindung beschrieben. Hierzu zeigt die einzige Figur den Ablauf einer codierten Berechnung eines Sinuswertes unter Anwendung des beschriebenen Verfahrens.

Der Sinuswert einer funktionalen Variablen x in Grad kann mittels folgender Funktion in einem Bereich von einschließlich 0° bis einschließlich 45° numerisch berechnet werden:

```
static float sin7pi4(float x){
float a = 9,9999989793669848536e-1;
float b = - 1,66666423796176028737e-1;
float c = 8,33179571459221545387e-3;
float d = - 1,94842039748219288187e-4;
float square = x*x;
float tmp1 = square*d;
float tmp2 = c + tmp1;
float tmp3 = square*tmp2;
float tmp4 = (b + tmp3);
float tmp5 = square*tmp4;
float tmp6 = (a + tmp5);
```

```
float tmp7 = tmp6*x;
return tmp7;
}
```

Bei der Funktion handelt es sich um eine Potenzreihe unter Verwendung der Konstanten a, b, c und d. Dabei können Zwischenschritte unter tmp1 - tmp7 zusammengefasst werden. Die Potenzreihe kann mit tmp7 abgeschlossen werden, welcher am Ende eines Programms ausgegeben werden kann (return tmp7).

Der Wert square kann das Quadrat der funktionalen Variablen x sein. Sämtliche Werte können eine Fließkommazahl (float) sein.

Die oben aufgeführte Funktion kann mittels des erfindungsgemäßen Verfahrens codiert durchgeführt werden. Es kann vorgesehen sein, dass eine Bitzahl n von z.B. 49 Bit zur Verfügung steht. Die Genauigkeit der Eingabe kann beispielsweise auf ein Tausendstel festgelegt werden.

In einem ersten Schritt P1 kann die Größe $Size_x$ berechnet werden. Gemäß der Grenzen des Steuerprogramms, welche bei einschließlich 0° bis einschließlich 45° liegen können, können bei einer Genauigkeit auf 1/1000° ein kleinstmöglicher Wert $min_x = 0$ und ein größtmöglicher Wert $max_x = 45000$ festgelegt werden. Somit liegt der Eingangswert als Ganzzahl vor. Es ergibt sich nach den obigen Definitionen:

$$Size_x := 2^{49}$$

$$min_x := 0$$

$$max_x := 45000$$

In einem zweiten Schritt P2 kann das Quadrat von x berechnet werden, wobei eine Bitanzahl von n = 49 Bit zur Verfügung stehen kann. Die Basis zur Berechnung eines Quadrats von x bei einer Bitanzahl von n=49, $Basis_{x2,n=49}$, kann aus dem kleinstmöglichen Wert $min_{x2,n=49}$ und dem größtmöglichen Wert $max_{x2,n=49}$ des Quadrats berechnet werden.

$$max_{x^2,n=49} := max_x * max_x$$

$$min_{x^2,n=49} := min_x * min_x$$

$$Basis_{x^2,n=49} := (max_{x^2} - min_{x^2})/Size_{x^2,n=49}$$

$$Wert_{x^2,n=49} := wert_x * wert_x / Basis_{x^2,n=49}$$
$$= wert_x * wert_x * 277999$$

Der Wert $wert_{x2,n=49}$ kann in einem dritten Schritt P3 von der Basis $Basis_{x2,n=49}$ auf eine Basis $Basis_{x2,n=24}$ umcodiert werden, welche eine Bitanzahl von 24 Bit aufweisen kann:

$$Wert_{x^2,n=24} = (wert_{x^2,n=49} + 2^{24})/2^{25}$$

In einem vierten Schritt P4 kann der temporäre Wert $wert_{tmp1}$ berechnet werden:

$$wert_{tmp1} := (wert_{x^2,n=49} * wert_{d,n=49} + k) / 2^{24}$$

In einem fünften Schritt P5 kann der temporäre Wert $wert_{tmp2}$ berechnet werden:

$$\text{wert}_{tmp2} := (\text{wert}_{c,n=49} * k_1 + \text{wert}_{tmp1,\,n=49} * k_2 + k) / 2^{24}$$

In einem sechsten Schritt P6 kann der temporäre Wert $\text{wert}_{tmp3}$ berechnet werden:

$$\text{wert}_{tmp3} := (\text{wert}_{x^2,n=24} * \text{wert}_{tmp2,\,n=24} + k) / 2^{24}$$

In einem siebten Schritt P7 kann der temporäre Wert $\text{wert}_{tmp4}$ berechnet werden:

$$\text{wert}_{tmp4} := (\text{wert}_{b,\,n=24} * k_1 + \text{wert}_{tmp3,\,n=24} * k_2 + k) / 2^{24}$$

In einem achten Schritt P8 kann der temporäre Wert $\text{wert}_{tmp5}$ berechnet werden:

$$\text{wert}_{tmp5} := (\text{wert}_{x^2,n=24} * \text{wert}_{tmp4,\,n=24} + k) / 2^{24}$$

In einem neunten Schritt P9 kann der temporäre Wert $\text{wert}_{tmp6}$ berechnet werden:

$$\text{wert}_{tmp6} := (\text{wert}_{a,\,n=24} * k_1 + \text{wert}_{tmp5,\,n=24} * k_2 + k) / 2^{24}$$

In einem zehnten Schritt P10 kann der temporäre Wert $\text{wert}_{tmp7}$ berechnet werden:

$$\text{wert}_{tmp7} := (\text{wert}_{x,n=24} * \text{wert}_{tmp6,\,n=24} + k) / 2^{24}$$

In einem elften Schritt P11 kann aus dem temporären Wert $\text{wert}_{tmp7}$ und seiner Basis $\text{Basis}_{tmp7}$ der Wert z berechnet werden:

$$z := \sin(x) := \text{wert}_{tmp7,\,n=24} * \text{Basis}_{tmp7}$$

In einem zwölften Schritt P12 kann aus dem temporären Wert $\text{wert}_{tmp7}$ und seiner Basis $\text{Basis}_{tmp7}$ der Wert $\text{wert}_z$ mit einer für einen Rückgabewert festgelegten Basis $2^{-49}$ berechnet werden:

$$\text{wert}_z := \text{Basis}_{tmp7} * \text{Basis}_{tmp7} / 2^{-49}$$

In einem dreizehnten Schritt P13 kann der Wert $\text{wert}_z$ in eine Fließkommazahl $\text{Float}_z$ umgewandelt werden. Aufgrund der Tatsache, dass die Basis des Werts $\text{wert}_z$ eine 2er Potenz ist, vorteilhaft.
Ein Programmcode könnte beispielsweise auf folgende Art geschrieben sein:

$$\text{Size} := 2^{49}$$

$$\text{Minimum} := 0$$

$$\text{Maximum} := 45000$$

$$\text{square}_{val49} := 277999 * X_{val} * X_{val}$$

$$\mathrm{square_{val24}} := (\mathrm{square_{val49}} + 2^{24}) / 2^{25}$$

$$\mathrm{tmp2_{val}} := 18172496 + (-1378477226 - \mathrm{squareval49}) / 2^{31}$$

$$\mathrm{tmp4_{val}} := (\mathrm{square_{val24}} * \mathrm{tmp2_{val}} + 111040616) / 2 - 18415894$$

$$\mathrm{tmp6_{val}} := (\mathrm{square_{val24}} * \mathrm{tmp4_{val}} - 197673) / 2^{18} + 11464190094$$

$$\mathrm{tmp7_{val}} := (\mathrm{tmp6_{val}} * \mathrm{x_{val}} + 2^{22}) / 2^{23}$$

$$\mathrm{tmp7_{bas}} := 1,277097000028899636e\text{-}8$$

$$z := \mathrm{SIN}(x) := \mathrm{tmp7_{val}} * 1,277097000028899636e\text{-}8$$

Wunschbasis für z: $2^{-49}$

$$\mathrm{Z_{val}} := \mathrm{tmp7_{bas}} * 7189417$$

Insgesamt zeigt das Beispiel, wie durch die Erfindung eine Darstellung von Daten zur Verfügung gestellt wird, welche eine flexible und effiziente Verarbeitung von ANBD-codierten Daten ermöglicht.

**Patentansprüche**

1. Verfahren zum Schützen von Daten in einem Datenspeicher vor einer unerkannten Veränderung, wobei eine funktionale, als Fließkommazahl vorliegende Variable x mittels eines Werts $\mathrm{wert_x}$, einer Eingangskonstanten A, einer Eingangssignatur $B_x$ und eines Zeitstempels D zu einer codierten Variablen $x_c$ gemäß der Formel

$$x_c := \mathrm{wert_x} * A + B_x + D$$

codiert und in dem Datenspeicher gespeichert wird, wobei zum Bilden des ganzzahligen Werts $\mathrm{wert_x}$ aus der funktionalen, als Fließkommazahl vorliegenden Variablen x diese bezüglich einer Basis $\mathrm{Basis_x}$ normiert wird,
**dadurch gekennzeichnet, dass**
der Wert $\mathrm{wert_x}$ nach der Formel

$$\mathrm{wert_x} := (x / \mathrm{Basis_x}) \bmod 2^{\mathrm{Sizex}}$$

berechnet wird, wobei Sizex die Größe des verfügbaren Speichers ist,
oder
der Wert $\mathrm{wert_x}$ nach der Formel

$$\mathrm{wert_x} := (x - \mathrm{min_x} / \mathrm{Basis_x}) \bmod 2^{\mathrm{Sizex}}$$

berechnet wird, wobei $\mathrm{min_x}$ ein vorgegebener Minimalwert von x ist.

2. Verfahren zur nach Anspruch 1, **dadurch gekennzeichnet, dass** die funktionale Variable x während eines Kompiliervorgangs zu der codierten Variablen $x_c$ codiert wird.

**3.** Verfahren nach einem der vorstehenden Ansprüche, **dadurch gekennzeichnet, dass** die Daten für ein Steuerprogramm bereitgestellt werden und die Basis $Basis_x$ auf einen Wert größer oder gleich der Differenz zwischen einem gemäß dem Steuerprogramm vordefinierten größten erreichbaren Wert $max_x$ des Werts x und einem gemäß dem Steuerprogramm vordefinierten kleinsten erreichbaren Wert $min_x$ geteilt durch die Größe des verfügbaren Speichers $Size_x$ eingestellt wird, sodass

$$Basis_x \geq (max_x - min_x)/Size_x \qquad .$$

**4.** Verfahren nach einem der vorstehenden Ansprüche, **dadurch gekennzeichnet, dass** eine codierte Addition $+_c$ von zwei codierten Variablen $x_{1c}$ und $x_{2c}$ mit

$$x_{3c} := x_{1c} +_c x_{2c}$$

gemäß der Formel:

$$wert_{x3} := (wert_{x1}*k_1 + wert_{x2}*k_2 + k_3)/Size_{x3}$$

durchgeführt wird, wobei

$$Basis_{x3} \geq (max_{x3} - min_{x3})/Size_{x3}$$

$$max_{x3} = max_{x1} + max_{x2}$$

$$min_{x3} = min_{x1} + min_{x2}$$

$$k_2/k_1 \approx Basis_{x1}/Basis_{x2}$$

$$k_1 + Basis_{x1}/2^n \approx Basis_{x3}$$

$$k_2 + Basis_{x2}/2^n \approx Basis_{x3}$$

die Konstanten $k_1$ und $k_2$ Relationen zwischen den Basen $Basis_{x1}$, $Basis_{x2}$ und $Basis_{x3}$ beschreiben und die Konstante $k_3$ derart gewählt wird, dass Rundungsfehler minimal werden.

**5.** Verfahren nach einem der vorstehenden Ansprüche, **dadurch gekennzeichnet, dass** eine codierte Multiplikation $*_c$ von zwei codierten Variablen $x_{1c}$ und $x_{2c}$ mit

$$x_{3c} := x_{1c} *_c x_{2c}$$

gemäß der Formel:

$$wert_{x3} := (wert_{x1}*wert_{x2} + k)/2^n$$

durchgeführt wird, wobei

$$Basis_{x1} \geq (max_{x1}-min_{x1})/Size_{x1}$$

$$Basis_{x2} \geq (max_{x2}-min_{x2})/Size_{x2}$$

$$Basis_{x3} \geq (max_{x3}-min_{x3})/Size_{x3}$$

$$Basis_{x3} \approx (Basis_{x1}*Basis_{x2})/Size_{x3}$$

$$max_{x3} = MAX(min_{x1}*min_{x2},min_{x1}*max_{x2}, max_{x1}*min_{x2}, max_{x1}*max_{x2})$$

$$min_{x3} = MIN(min_{x1}*min_{x2},min_{x1}*max_{x2}, max_{x1}*min_{x2}, max_{x1}*max_{x2})$$

die Konstante k derart gewählt wird, dass der Rundungsfehler minimal wird.

6. Verfahren nach einem der vorstehenden Ansprüche, **dadurch gekennzeichnet, dass** eine Umkodierung von einer $Basis_x$ auf eine Basis $Basis'_x$ gemäß der Formel:

$$Wert'_{x1} = (((wert_{x1}+k_1)/2^n)*k_2+k_3)/2n'$$

durchgeführt wird, wobei

$$k_2/(2n+n') \approx Basis_x/Basis'_x ,$$

die Konstanten $k_1$, $k_2$ und $k_3$ derart gewählt werden, dass der Rundungsfehler in Abhängigkeit von $k_2$ minimiert wird, n die verfügbare Bitanzahl für die Speicherung des einzelnen Werts $wert_{x1}$ ist, und
n' die Bitanzahl der umcodierten Darstellung $Wert'_{x1}$ ist.

7. Datenverarbeitungsanlage die dazu eingerichtet ist, eines der vorstehenden Verfahren durchzuführen.

**Claims**

1. Method for protecting data in a data memory against an undetected change, wherein a functional variable x present as a floating-point number is encoded by means of a value $value_x$, an input constant A, an input signature $B_x$ and a timestamp D into a coded variable $x_c$ according to the formula

$$x_c := value_x*A+B_x+D,$$

and stored in the data memory, wherein
the functional variable x is normalised relative to a base $Base_x$ in order to form the integer value $value_x$ from said functional variable x present as a floating-point number, **characterised in that**
the value $value_x$ is calculated according to the formula

$$value_x := (x/Base_x)\bmod 2^{Size_x},$$

where $Size_x$ is the size of the available memory,
or

the value $value_x$ is calculated according to the formula

$$value_x := (x-min_x/Base_x)\bmod 2^{Size_x},$$

where $min_x$ is a predefined minimum value of x.

2. Method according to claim 1, **characterised in that** the functional variable x is encoded during a compilation operation to yield the coded variable $x_c$.

3. Method according to one of the preceding claims, **characterised in that** the data is provided for a control program and the base $Base_x$ is set to a value greater than or equal to the difference between a greatest attainable value $max_x$ predefined according to the control program for the value x and a smallest attainable value $min_x$ predefined according to the control program, divided by the size of the available memory $Size_x$, such that

$$Base_x \geq (max_x-min_x)/Size_x.$$

4. Method according to one of the preceding claims, **characterised in that** a coded addition $+_c$ of two coded variables $x_{1c}$ and $x_{2c}$, where

$$x_{3c} := x_{1c} +_c x_{2c},$$

is performed according to the formula:

$$value_{x3} := (value_{x1}*k_1+value_{x2}*k_2+k_3)/Size_{x3},$$

where

$$Base_{x3} \geq (max_{x3}-min_{x3})/Size_{x3}$$

$$max_{x3} = max_{x1}+max_{x2}$$

$$min_{x3} = min_{x1}+min_{x2}$$

$$k_2/k_1 \approx Base_{x1}/Base_{x2}$$

$$k_1+Base_{x1}/2^n \approx Base_{x3}$$

$$k_2+Base_{x2}/2^n \approx Base_{x3}$$

the constants $k_1$ and $k_2$ describe the relations between the bases $Base_{x1}$, $Base_{x2}$ and $Base_{x3}$ and the constant $k_3$ is chosen so as to minimise rounding errors.

5. Method according to one of the preceding claims, **characterised in that** a coded multiplication $*_c$ of two coded variables $x_{1c}$ and $x_{2c}$, where

$$x_{3c} := x_{1c} +_c x_{2c},$$

is performed according to the formula:

$$value_{x3} := (value_{x1}*value_{x2}+k)/2^n,$$

where

$$Base_{x1} \geq (max_{x1}-min_{x1})/Size_{x1}$$

$$Base_{x2} \geq (max_{x2}-min_{x2})/Size_{x2}$$

$$Base_{x3} \geq (max_{x3}-min_{x3})/Size_{x3}$$

$$Base_{x3} \approx (Base_{x1}*Base_{x2})/Size_{x3}$$

$$max_{x3} = MAX(min_{x1}*min_{x2},min_{x1}*max_{x2}, max_{x1}*min_{x2}, max_{x1}*max_{x2})$$

$$min_{x3} = MIN(min_{x1}*min_{x2},min_{x1}*max_{x2}, max_{x1}*min_{x2}, max_{x1}*max_{x2})$$

the constant k is chosen so as to minimise the rounding error.

6. Method according to one of the preceding claims, **characterised in that** a recoding from a $Base_x$ to a base $Base'_x$ is performed according to the formula:

$$value'_{x1} = (((value_{x1}+k_1)/2^n)*k_2+k_3)/2n',$$

where

$$k_2/(2n+n') \approx Base_x/Base'_x,$$

the constants $k_1$, $k_2$ and $k_3$ are chosen so as to minimise rounding errors as a function of $k_2$,
n is the available number of bits n for storing the single value $value_{x1}$, and
n' is the number of bits of the recoded representation $value'_{x1}$.

7. Data processing system which is configured to perform one of the above-cited methods.


**Revendications**

1. Procédé de protection des données d'une mémoire de données vis-à-vis d'une modification non reconnue, dans lequel on code une variable x fonctionnelle présente sous la forme d'un nombre à virgule flottante, au moyen d'une valeur $wert_x$, d'une constante A d'entrée, d'une signature $B_x$ d'entrée et d'un horodatage D en une variable $x_c$ codée selon la formule

$$x_c := wert_x*A+B_x+D$$

et on la met dans la mémoire de données, dans lequel, pour former la valeur $wert_x$ en nombre entier, on norme, à partir de la variable x fonctionnelle présente sous la forme d'un nombre à virgule flottante, celle-ci par rapport à une

base $Basis_x$, **caractérisé en ce que**
on calcule la valeur $wert_x$ selon la formule

$$wert_x := ( x/ Basis_x )mod\ 2^{Sizex}$$

Sizex étant la dimension de la mémoire disponible, ou
on calcule la valeur $wert_x$ selon la formule

$$wert_x := ( x-min_x/Basis_x )mod\ 2^{Sizex}$$

$min_x$ étant une valeur minimum donnée à l'avance de x.

2.  Procédé suivant la revendication 1, **caractérisé en ce que** l'on code la variable x fonctionnelle pendant une opération de compilation en la variable $x_c$ codée.

3.  Procédé suivant l'une des revendications précédentes, **caractérisé en ce que** l'on met les données à disposition d'un programme de commande et on met la base $Basis_x$ a une valeur supérieure ou égale à la différence entre une valeur $max_x$, définie à l'avance selon le programme de commande et la plus grande pouvant être obtenue de la valeur x, et une valeur $min_x$ définie à l'avance selon le programme de commande et la plus petite pouvant être obtenue, divisée par la dimension de la mémoire disponible $Size_x$, de manière à ce que

$$Basis_x \geq ( max_x-min_x )/Size_x.$$

4.  Procédé suivant l'une des revendications précédentes, **caractérisé en ce que** l'on effectue une addition $+_c$ codée de deux variables $x_{1c}$ et $x_{2c}$ codées par

$$x_{3c} := x_{1c} +_c x_{2c}$$

selon la formule :

$$wert_{x3} := ( wert_{x1}*k_1+wert_{x2}*k_2+k_3 )/Size_{x3}$$

dans laquelle

$$Basis_{x3} \geq ( max_{x3}-min_{x3} )/Size_{x3}$$

$$max_{x3} = max_{x1}+max_{x2}$$

$$min_{x3} = min_{x1}+min_{x2}$$

$$k_2/k_1 \approx Basis_{x1}/Basis_{x2}$$

$$k_1+Basis_{x1}/2^n \approx Basis_{x3}$$

$$k_2+Basis_{x2}/2^n \approx Basis_{x3}$$

les constantes $k_1$ et $k_1$ décrivant des relations entre les bases $Basis_{x1}$, $Basis_{x2}$ et $Basis_{x3}$ et on choisit la constante $k_3$ de manière à minimiser l'erreur d'arrondi.

5. Procédé suivant l'une des revendications précédentes, **caractérisé en ce que** l'on effectue une multiplication $*_c$ codée de deux variables $x_{1c}$ et $x_{2c}$ codées par

$$x_{3c} := x_{1c} \; *_c \; x_{2c}$$

selon la formule :

$$wert_{x3} := ( \; wert_{x1}*wert_{x2+}k \; )/2^n$$

dans laquelle

$$Basis_{x1} \geq ( \; max_{x1}-min_{x1} \; )/Size_{x1}$$

$$Basis_{x2} \geq ( \; max_{x2}-min_{x2} \; )/Size_{x2}$$

$$Basis_{x3} \geq ( \; max_{x3}-min_{x3} \; )/Size_{x3}$$

$$Basis_{x3} \approx ( \; Basis_{x1}*Basis_{x2} \; )/Size_{x3}$$

$$max_{x3} = MAX( \; min_{x1}*min_{x2}, \; min_{x1}*max_{x2}, \; max_{x1}*min_{x2}, \; max_{x1}*max_{x2} \; )$$

$$min_{x3} = MIN( \; min_{x1}*min_{x2}, \; min_{x1}*max_{x2}, \; max_{x1}*min_{x2}, \; max_{x1}*max_{x2} \; )$$

on choisit la constante k de manière à minimiser l'erreur d'arrondi.

6. Procédé suivant l'une des revendications précédentes, **caractérisé en ce que** l'on effectue un transcodage d'une $Basis_x$ à une base $Basis'_x$ selon la formule :

$$Wert'_{x1} = ( \; ( \; ( \; wert_{x1}+k_1 \; )/2^n \; )* \; k_2+ \; k_3 \; )/2^{n'}$$

dans laquelle

$$k_2/( \; 2n+n' \; ) \approx Basis_x/Basis'_x \; ,$$

les constantes $k_1$, $k_2$ et $k_3$ étant choisies de manière à minimiser l'erreur d'arrondi en fonction de $k_2$, n est le nombre de bits disponibles pour la mise en mémoire des diverses valeurs $wert_{x1}$, et n' est le nombre de bits de la représentation $Wert'_{x1}$ transcodée.

7. Installation de traitement de données conçue pour effectuer l'un des procédés précédents.

$$X \quad \text{—P1}$$

$$X *_c X$$

$$Wert_{x^2, n=49} \quad \text{—P2}$$

$$Wert_{x^2, n=49} \dashrightarrow Wert_{x^2, n=24}$$

$$Wert_{x^2, n=24} \quad \text{—P3}$$

$$Wert_{x^2, n=24} *_c Wert_d$$

$$Wert_{tmp1} \quad \text{—P4}$$

$$Wert_{tmp1} +_c Wert_c$$

$$Wert_{tmp2} \quad \text{—P5}$$

$$Wert_{tmp2} *_c Wert_{x^2, n=24}$$

$$Wert_{tmp3} \quad \text{—P6}$$

$$Wert_{tmp3} +_c Wert_b$$

$$Wert_{tmp4} \quad \text{—P7}$$

$$Wert_{tmp4} *_c Wert_{x^2, n=24}$$

$$Wert_{tmp5} \quad \text{—P8}$$

$$Wert_{tmp5} +_c Wert_a$$

$$Wert_{tmp6} \quad \text{—P9}$$

$$Wert_{tmp6} *_c Wert_x$$

$$Wert_{tmp7} \quad \text{—P10}$$

$$Wert_{tmp7} * Basis_{tmp7}$$

$$Z \quad \text{—P11}$$

$$Basis_{tmp7} * Basis_{tmp7}/2^{-49}$$

$$Wert_Z \quad \text{—P12}$$

$$Float_Z \quad \text{—P13}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3104276 A1

**In der Beschreibung aufgeführte Nicht-Patentliteratur**

- **UTE SCHIFFEL.** Hardware error detection using AN-codes. *Fakultät für Informatik der Technischen Universität Dresden vorgelegten Dissertation,* 2011